# EUROPÄISCHE PATENTSCHRIFT

(11) **EP 1 213 493 B1**
(45) Veröffentlichungstag und Bekanntmachung des Hinweises auf die Patenterteilung: **09.11.2005**
(21) Anmeldenummer: 01128286.0
(22) Anmeldetag: 29.11.2001
(51) Int. Cl.: F16B 13/08, F16B 5/06, F16B 37/00, F16L 3/13, F16L 3/22

(54) **Steckdübelsystem**
Dowel system
Système de cheville

(30) Priorität: 05.12.2000 DE 10060271
(43) Veröffentlichungstag der Anmeldung: 12.06.2002
(73) Patentinhaber: Gräwe, Bernd, 45701 Herten (DE)
(72) Erfinder: Balen, Frank Pieter Jacobus, 3844 ZL Harderwijk (NL)
(74) Vertreter: Valentin, Ekkehard

(56) Entgegenhaltungen:
- DE-U- 29 805 495
- US-A- 5 429 467

## Beschreibung

Die Erfindung betrifft ein Steckdübelsystem zur ortsfesten Halterung von Körpern an einem Untergrund, umfassend eine Haltevorrichtung sowie einen die Haltevorrichtung befestigenden, einstückig aus Kunststoff hergestellten Steckdübel, der in ein Bohrloch einer Wandung einsteckbar und drehfest selbstklemmend ist. In diesem Zusammenhang sind unter dem Begriff Körper jegliche Teile zu verstehen, die an einem Untergrund befestigt werden sollen, beispielsweise Langformteile wie Kabel, Rohre, Installationsleitungen, Kleinkörper wie Türstopper, Badarmaturen, wie Handtuchhalter.

Aus der DE 41 23 754 A1 ist ein Halteelement für Installationsarbeiten bekannt, das aus einem Schellenkörper, einem am Fuß des Schellenkörpers gehalterten Befestigungsmittel mit Schaft und Kopf sowie einem in eine Gebäudewand einschlagbaren Dübel besteht. Die Kabelschelle weist im Fußbereich eine Lochung auf, die vom Schaft eines Befestigungsmittels, beispielsweise einer Schlagschraube, durchgreifbar ist. Zur Befestigung wird der Dübel in ein Bohrloch eingetrieben und anschließend die Kabelschelle mit der den Fuß durchgreifenden Schlagschraube so auf den Dübel aufgesetzt, daß die Schlagschraube in den Dübel eingetrieben werden kann. In der Endlage stützt sich der Kopf der Schlagschraube am Fuß des Schellenkörpers ab, während der Fuß des Schellenkörpers durch die Schlagschraube an die Gebäudewand angepreßt wird.

Neben diesen herkömmlichen Dübeln sind selbstklemmende Dübel bekannt, die in ein Bohrloch einer Wandung einsteckbar und selbstklemmend in dem Bohrloch festlegbar sind. Die Selbstklemmung entsteht durch eine gegen die Einsteckrichtung aufgebrachte Zugwirkung. Es ist auch bekannt, derartige Dübel zur Befestigung von Haltevorrichtungen einzusetzen. In der DE 43 12 340 C2 ist beispielsweise ein selbstklemmender Dübel beschrieben mit einem rastbefestigten oder angeformten Flansch als Kopfende, der Bestandteil einer Klemmschelle für Installationsmaterial ist. Bei der Ausführungsform des angeformten Flansches wird dieser Dübel zur Befestigung eines entsprechend gelochten Profilstücks benutzt.

Bei derartigen Lösungen ist von Nachteil, daß diese Systeme aufgrund des für die Dübelverspannung notwendigen axialen Zuges den zu befestigenden Gegenstand nicht kraftschlüssig gegen die Bohrlochwandung spannen. Wird zum Beispiel eine separate Schelle mittels eines bekannten Steckdübels im Bohrloch befestigt, kommt es aufgrund des Zugschlupfes zu einem Zwischenraum zwischen Wandung und Schellenfuß mit einem damit unerwünschten, nicht festen Sitz der Schelle.

Durch den Gegenstand der nach den Priositätsdatum veröffentlichten Patentanmeldung 199 26 060.5 werden diese Nachteile trotz Einsatz eines selbstklemmenden Steckdübels gelöst und eine sichere sowie feste Befestigung der Haltevorrichtung zur ortsfesten Halterung von Körpern, beispielsweise Langformteile wie Kabel oder Rohre, gewährleistet, indem die Haltevorrichtung, beispielsweise eine Rohrschelle oder ein Kabelhaltebügel, durch Drehung um die Längsachse des Dübels satt zur Anlage an den Untergrund kommt und gleichzeitig der Steckdübel durch die entgegen der Einsteckrichtung aufgebrachte Zugwirkung verspannbar ist. Aufgrund der Drehbewegung der Haltevorrichtung um die Längsachse des drehfesten Dübels wird diese gegenüber dem Untergrund sicher und fest verspannt und gleichzeitig die für eine feste Haltefunktion des selbstklemmenden Steckdübels notwendige Zugwirkung aufgebracht.

Von Vorteil des erfindungsgemäßen Systems ist insbesondere, daß eine Befestigung und sattes Anliegen der Haltevorrichtungen an dem Untergrund ohne weitere Werkzeuge, wie Schlagmittel, sondern allein durch manuelles Drehen der Haltevorrichtung um die Längsachse des Steckdübels möglich sind. Das System ist insgesamt einfach und unabhängig von weiteren Hilfsmitteln handhabbar. Da jedoch die Position der Haltevorrichtung, insbesondere Rohrschelle, gleich der Bohrlochposition ist, kann es bei verlaufenen Bohrlöchern bei der Montage der Haltevorrichtung zu Lageungenauigkeiten kommen, d.h. die aufeinanderfolgend montierten Haltevorrichtungen liegen nicht in einer Flucht.

Der Erfindung liegt daher die Aufgabe zugrunde, ein gattungsgemäßes Steckdübelsystem zu schaffen, das auch bei Bohrlochabweichungen eine lagegenaue Montage erlaubt.

Diese Aufgabe wird erfindungsgemäß durch die Merkmale in Anspruch 1 gelöst. Der mit seinem Gewinde in die Vorsprünge bzw. Rippen der Haltevorrichtung eingreifende Steckdübel läßt sich somit sowohl verschrauben als auch gleichzeitig seitwärts (links-rechts) innerhalb der Haltevorrichtung verschieben. Die Kombination von Steckdübelgewinde und Vorsprüngen im Langloch der Haltevorrichtung ermöglicht im Zusammenwirken somit ein Ausrichten der Haltevorrichtung bei einem nicht exakten Bohrloch. Hierfür wird kein weiteres Bauteil benötigt.

Eine Ausgestaltung der Erfindung sieht vor, daß die eine Längswand zwei leistenartige Vorsprünge aufweist, denen an der anderen Längswand ein leistenartiger Vorsprung zugeordnet ist, der bezogen auf die beiden gegenüberliegenden Vorsprünge in deren Mittenabstand versetzt angeordnet ist. Die somit drei komplementären Vorsprünge stellen ein punktmäßiges Tragen des Steckdübels und damit dessen Verschraub- und Verschiebbarkeit sicher.

Weitere Merkmale und Vorteile der Erfindung ergeben sich aus den Ansprüchen und der nachfolgenden Beschreibung von in den Zeichnungen dargestellten Ausführungsbeispielen der Erfindung. Es zeigen:
- Figur 1: eine Seitenansicht eines Steckdübels des Steckdübelsystems;
- Figur 2: eine Seitenansicht eines Steckdübels des Steckdübelsystems der Fig. 1 mit einem geschwächtem Dübelschaft;
- Figur 3: eine Vorderansicht einer Haltevorrichtung des Steckdübelsystems nach einer Ausführungsform als herkömmliche Kabelschelle;
- Figur 4: eine Querschnittsansicht des Steckdübelsystems nach Figur 3;
- Figur 5: eine Querschnittsansicht des Steckdübelsystems nach der Figur 4 im vormontierten Zustand;
- Figur 6: eine Querschnittsansicht des Steckdübelsystems nach der Figur 4 im montierten Zustand;
- Figur 7: in der Draufsicht eine gegenüber dem Steckdübelsystem nach den Fig. 1 bis 6 mit einem Langloch ausgebildete Haltevorrichtung;
- Figur 8: die Haltevorrichtung nach Fig. 7 im Längsschnitt; und
- Figur 9: im Querschnitt die Haltevorrichtung nach Fig. 8 mit darin eingeschraubten Steckdübel.

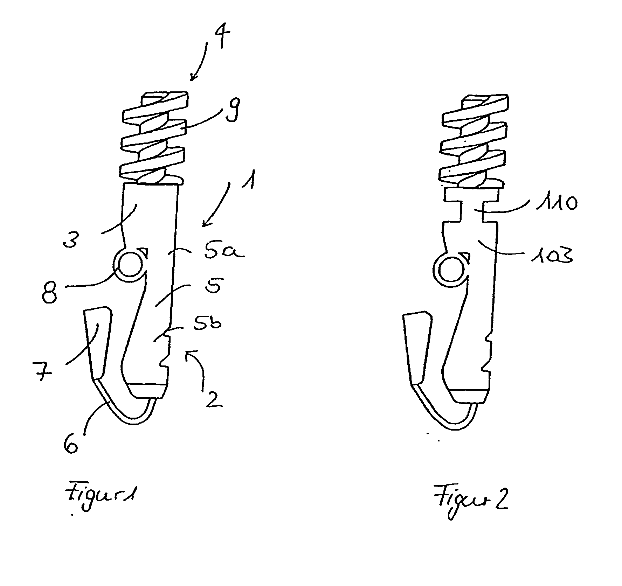

Die Figur 1 zeigt einen selbstklemmenden Steckdübel 1 eines Steckdübelsystems, der sich aus einem in das Bohrloch einsteckbaren Dübelendkörper 2, einem Dübelschaft 3 und einem Gewindezapfen 4 als Dübelende zusammensetzt.

Das Prinzip der Selbstklemmung des Steckdübels wird zum Verständnis kurz beschrieben. Der Dübelendkörper 2 besteht aus einem mit dem Dübelschaft 3 einstückig ausgebildeten ersten Keilbereich 5 sowie einem mit dem Keilbereich 5 über einen bandförmigen Materialstreifen 6 verbundenen, korrespondierend ausgebildeten kleineren zweiten Keilbereich 7. Im Auflagezustand bilden der erste und zweite Keilbereich 5, 7 als Dübelende eine annähernd zylindrische Form. Der erste Keilbereich 5 weist einen halsförmigen Teil 5a, der sich von dem Schaft 3 erstreckt, sowie einen konusförmigen Teil 5b auf. Es ist zusätzlich ein Ring 8 aus elastischem Material vorgesehen, der an dem halsförmigen Teil 5a über seine Umfangsfläche befestigt ist. Während beim Einführen des Dübels in das Bohrloch der Gesamtquerschnitt der miteinander korrespondierenden Keilbereiche 5 und 7 gleich dem oder kleiner als der Bohrlochdurchmesser ist, wird beim Angreifen von axialen Auszugskräften dieser Gesamtquerschnitt durch die axiale Verschiebung der Keilflächen zueinander so vergrößert, daß der Steckdübel kraftschlüssig gegen die Bohrlochwandung gepreßt wird. Durch die Ovalisierung und Längung unterstützt der Ring 8 eine Verschiebung der Keilflächen hin zu einem vergrößerten Gesamtquerschnitt und verhindert gleichzeitig als Wegwiderstand die Lösebewegung der Keile. Diese konkrete Ausbildung eines selbstklemmenden Steckdübelendes dient nur als Beispiel. Andere Arten von Steckdübeln sind ebenfalls denkbar.

Der Gewindezapfen 4 ist als Trapezgewinde 9 mit großer Steigung bei großer Gewindetiefe ausgebildet. Während sich die Gewindezwischenräume bzw. die Zähne zur Aufnahme von zu hohen Torsionskräften elastisch verformen können, ist nach einer Weiterentwicklung des Steckdübels der Dübelschaft 103 mit einer zusätzlichen Soll-Schwachstelle in Form einer kreisförmigen Nut 110 versehen (vgl. Figur 2).

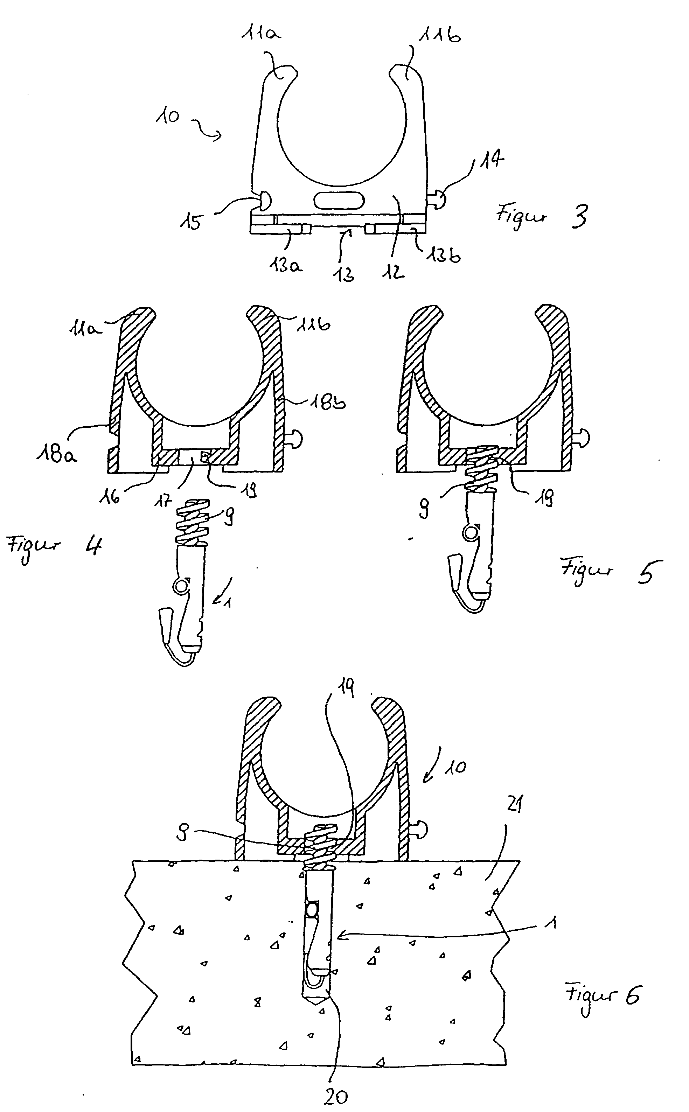

Die Figur 3 zeigt eine Vorderansicht einer Ausführungsform einer Haltevorrichtung des Steckdübelsystems als herkömmliche, bekannte Kabel- bzw. Rohrschelle. Die Kabelschelle 10 ist einstückig aus Kunststoff hergestellt. Sie setzt sich aus zwei Klammern 11a und 11b sowie einem Endstück 12 mit Auflagefläche 13 zusammen. Die Auflagefläche wird durch zwei sich gegenüberliegende U-förmige plattenförmige Klammern 13a, 13b gebildet. Ferner ist die Kabelschelle 10 an einer Seite mit einem Vorsprung 14 und an der anderen Seite mit einer korrespondierenden Nut 15 versehen. Auf diese Weise können benachbarte Schellen zu einem Verbund zusammengesteckt werden.

Aus den Querschnitten der Figuren 4 und 5 wird deutlich, daß die Schelle eine Einsteckhülse 16 formt, in der das Einführloch 17 für das Dübelende eingebracht ist. Zwischen der Einsteckhülse 16 und den Randbereichen 18a, 18b ist die Schelle hohl. Das Einführloch 17 ist mit einem halbkreisförmigen Gewindeabschnitt 19 versehen, in den das Dübelgewinde 9 leicht und schnell eindrehbar ist (Figur 5).

Den montierten Zustand dieser Ausführungsform des Steckdübelsystems zeigt Figur 6. Der selbstklemmende Dübel 1 befindet sich drehfest im Bohrloch 20. Durch Drehung der Schelle 10 um den Gewindezapfen 9 des Dübels 1 kommt diese satt zur Anlage an den Untergrund 21, beispielsweise Wände, Böden, Dekken und dergleichen, und gleichzeitig erfährt der Dübel 1 die notwendige axiale Auszugskraft. Insgesamt schafft die das Steckdübelsystem die Verspannung nach dem Gewindeprinzip durch Drehung der Haltevorrichtung (Rohrschelle 10).

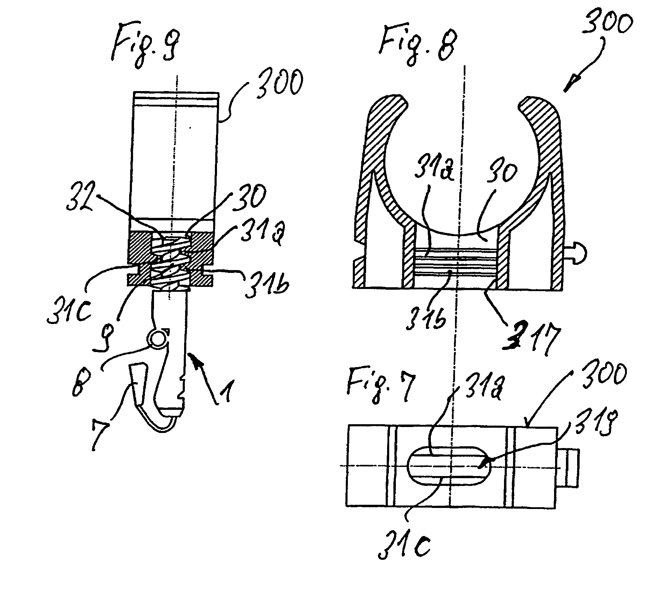

Damit bei im Untergrund 21 aufgrund von verlaufenden Bohrungen nicht exakt vorliegenden Bohrlöchern 20 ein Ausrichten der Haltevorrichtung möglich ist, ist die in den Fig. 7 bis 9 dargestellte Haltevorrichtung 300 gegenüber der zuvor beschriebenen Ausführungsform (Fig. 1 bis 6) in ihrem fußseitigen Bereich mit einem Langloch 317 versehen. Dieses ist an seiner einen Längswand 30 mit zwei leistenartigen Vorsprüngen 31a, 31b und an der anderen, gegenüberliegenden Längswand 32 mit einem, bezogen auf die beiden Vorsprünge 31a, 31b in eine Mittenlage versetzten Vorsprung 31c ausgebildet. Die komplementären Vorsprünge 31a,b und 31c stellen das Gegengewinde 319 für das Trapezgewinde 9 des Steckdübels 1 bereit, da sie ein definiertes punktmäßiges Tragen des Steckdübels 1 gewährleisten.

Nach dem Einschrauben des Steckdübels 1 mit seinem Gewinde 9 in die Haltevorrichtung 300 - wie in Fig. 9 gezeigt - ermöglichen die leistenartigen Vorsprünge 31a, b bzw. 31c ohne ein zusätzliches Bauteil in einfacher Weise ein Ausrichten durch entsprechendes Verschieben des Steckdübels 1 in dem Langloch 317 an eine nicht exakte, verlaufene Bohrung, so daß sich aufgrund dieser Ausgleichsmöglichkeit im Abstand hintereinander bzw. nebeneinander montierte Haltevorrichtungen 300 in Flucht bringen lassen.

## Patentansprüche

1. Steckdübelsystem zur ortsfesten Halterung von Körpern an einem Untergrund, umfassend eine Haltevorrichtung (10) sowie einen die Haltevorrichtung befestigenden, einstückig aus Kunststoff hergestellten Steckdübel (1), der in ein Bohrloch einsteckbar und drehfest selbstklemmend ist, **dadurch gekennzeichnet, daß** die Haltevorrichtung (10; 300) durch Drehung um die Längsachse des Steckdübels (1) satt zur Anlage an den Untergrund kommt und sich gleichzeitig der Dübel (1) durch die entgegen der Einsteckrichtung aufgebrachte axiale Zugwirkung verspannt, und der Steckdübel (1) mit einem Gewinde (9) und die Haltevorrichtung (10; 300) mit einem entsprechenden Gegengewinde versehen ist; und daß
das Gegengewinde (319) in einem fußseitigen Langloch (317) der Haltevorrichtung (300) in Form von leistenartigen, sich über die Länge der Längswände (30, 32) des Langlochs (317) erstreckenden Vorsprüngen (31a, b; 31c) ausgebildet ist.

2. Steckdübelsystem nach Anspruch 1,
**dadurch gekennzeichnet,**
**daß** die eine Längswand (30) zwei leistenartige Vorsprünge (31,31b) aufweist, denen an der anderen Längswand (32) ein leistenartiger Vorsprung (31c) zugeordnet ist, der bezogen auf die beiden gegenüberliegenden Vorsprünge (31a, 31b) in deren Mittenabstand versetzt verläuft.

## Claims

1. An insertable anchor system for the fixed attachment of bodies to a backing surface, including a retaining mechanism (10) and an insertable anchor (1) made from one piece in plastic that secures the retaining device, is insertable in a drill hole and is self-locking in torque-proof manner,
**characterised in that**
the retaining mechanism (10; 300) is brought to lie exactly flush against the backing surface by rotation of the insertable anchor (1) about the longitudinal axis thereof, and at the same time the anchor (1) braces itself due to the axial tensile load applied in the opposite direction to the insertion, and the insertable anchor (1) is fumished with a thread (9) and the retaining mechanism (10; 300) is fumished with a corresponding opposite thread, and that the opposite thread (319) is conformed in a slot (317) in the foot side of the retaining mechanism (300) as strip-like projections (31 a, b; 31 c) extending the length of the longitudinal walls (30, 32) of the slot (317).

2. The insertable anchor system according to claim 1,
**characterised in that**
the one longitudinal wall (30) has two strip-like projections (31, 31 b), to which a strip-like projection (31 c) on the other longitudinal wall (32) is assigned, and which extends relative to the two opposing projections (31 a, 31 b) and offset from the middle distance therebetween.

## Revendications

1. Système de chevilles insérables pour la fixation fixe de corps sur une base, comprenant un dispositif de fixation (10) ainsi qu'une cheville enfichable (1) qui est fabriquée d'un seul tenant en matière plastique fixant le dispositif support, qui est insérable dans un trou de perçage et est autoverrouillable de manière rigide à la torsion **caractérisé en ce que** le dispositif de support (10; 300) vient s'appliquer affleure contre la base par rotation autour de l'axe longitudinal de la cheville insérable (1) et la cheville (1) se tend en même temps par l'action de traction axiale appliquée à l'encontre du sens d'insertion, et la broche insérable (1) est munie d'un flet (9) et le dispositif de support (10; 300) d'un filet antagoniste correspondant, et **en ce que** le filet antagoniste (319) est ménagé dans un trou allongé (317) côté pied du dispositif de support (300) sous forme de protubérances (31 a, b; 31 c) sous forme de lisière et s'étendant sur la longueur des parois longitudinales (30, 32) du trou allongé (317).

2. Système de chevilles insérables selon la revendication 1, **caractérisé en ce qu'**une paroi latérale (30) présente deux protubérances en forme de lisière (31, 31 b) auxquelles est associée une protubérance (31 c) en forme de lisière sur l'autre paroi longitudinale (32), qui s'étend décalée dans sa distance médiane par rapport aux deux protubérances opposées (31 a, 31 b)
